Europäisches Patentamt

European Patent Office

Office européen des brevets

(11) Publication number: **0 286 218**
**A1**

# EUROPEAN PATENT APPLICATION

(21) Application number: 88301674.3

(22) Date of filing: 26.02.88

(51) Int. Cl.4: **C08C 19/00** , **C08F 8/42** , **C08K 9/06**

The title of the invention has been amended (Guidelines for Examination in the EPO, A-III, 7.3).

(30) Priority: 09.03.87 GB 8705481

(43) Date of publication of application:
12.10.88 Bulletin 88/41

(84) Designated Contracting States:
AT BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Carey, John Gerard
St. Annes Windmill Lane
Appleton Warrington Cheshire WA4 5JN(GB)
Inventor: Rothon, Roger Norma
3 Orchard Croft
Guilden Sutton Chester(GB)
Inventor: Ryan, Thomas Anthony
"Udine" Quarry Lane
Kelsall Cheshire CW6 0PD(GB)

(74) Representative: Draggett, Peter Thornton et al
Imperial Chemical Industries PLC P.O. Box 6
Bessemer Road
Welwyn Garden City Herts AL7 1HD(GB)

(54) Adhesion promoter composition.

(57) An adhesion promoter compositon comprising an organic polymer, of number average molecular weight up to 300,000. and containing an acidic group (or a precursor thereof) and a condensable group containing silicon, organic polymer components thereof, substrates coated with the promoter, and with other organic polymer coatings, and to processes for the preparation of the promoters and the coated substrates.

EP 0 286 218 A1

## FILLERS

This invention relates to novel adhesion promoters, organic polymer components thereof, substrates coated with the promoters, and with other organic polymer coatings, and to processes for the preparation of the promoters and the coated substrates. In particular this invention relates to filler coating compositions, organic polymer components thereof, fillers coated with the coating compositions, and with other organic polymers in the form of a matrix in which the coated filler is dispersed, and to processes for the preparation of the coating compositions, the coated fillers and the filled matrix.

It is known to enhance some of the physical properties of the interface between a variety of surface coating compositions based on organic polymers and (often inorganic) substrates, eg the adhesion of such compositions to such substrates, by first coating the substrate with an adhesion promoter, and or by incorporating an adhesion promoter into the surface coating composition. The surface coating composition may be eg an adhesive intended to bond the substrate to another body, a protective (eg paint or plastics) coating, or (as described below) it may extend to form a plastics matrix around a fibrous or particulate filler substrate.

It is also known to modify the properties of a variety of organic polymers by incorporating into such polymers one or more particulate or fibrous inorganic materials. These inorganic materials, commonly known as fillers, are generally less expensive than organic polymers and they may serve to increase the bulk of the resultant polymer and so permit a polymer to be used more economically, and to enhance at least some of the physical properties of the polymer, for example the hardness, tensile modulus, tear strength, tensile strength or resistance to wear of the polymer.

It is desirable to make such fillers as compatible as possible with organic polymers and to try to optimise filler-polymer bonding, since this in turn generally enhances the abovementioned bulk physical properties of the polymer. This may be achieved by coating the filler with an adhesion promoter having a good bonding or adhesion to the filler and the matrix and then coating the coated filler in turn with the matrix or a precursor thereof and/or by incorporating such an adhesion promoter into the matrix polymer or its precursor and coating the filler with the mixture.

As regards the filler-polymer interface and the use of an adhesion promoter to enhance the adhesion of the polymer to the filler, the filled polymer matrix is in effect a fibrous or particulate inorganic substrate coated with a polymer coating composition which happens to extend into a matrix which coats a multiplicity of substrate fibres or particles.

Depending on the form of the substrate, adhesion promoters are useful in optimising substrate-coating bonding, inter alia in securing circuit components (extended substrate surface), in electrical wire and optical fibre sheathing (fibrous substrate), in securing catalysts and abrasives to supports (extended and particulate substrates), and within plastics matrices in coating fillers (fibrous or particulate) including fire retardants, and pigments and recording media particles.

In all embodiments of such surface coating, it is advantageous to provide a versatile adhesion promoter composition comprising a component with a variety of functional groups compatible with or capable of bonding to a range of conventional substrate materials and/or coating matrix polymers.

Accordingly, in a first aspect the present invention provides an adhesion promoter composition comprising an organic polymer, of number average molecular weight up to 300,000, and containing an acidic group (or a precursor thereof) and a condensable group containing silicon. In one embodiment of this first aspect the adhesion promoter composition is adapted for use with a substrate which is a fibrous or particulate filler.

In a second aspect the present invention provides the use of the composition of the first aspect to enhance at least some of the physical properties of an interface between a surface coating composition based on an organic polymer and an inorganic substrate. In one embodiment the coating composition and the substrate are respectively a polymer matrix and a dispersion of a fibrous or particulate filler.

In a third aspect the present invention provides the foregoing polymer components of the adhesion promoter composition.

Within the scope of the term "polymer" in the foregoing expressions are included polycondensates and oligomers and oligocondensates; indeed the molecular weight of the polymer may be as low as 750 or even 200 and the number of the repeat units may often be sufficiently low that the polymer is a non-particulate fluid, such as a liquid.

Within the scope of the term "precursor of an acidic group", are included all groups convertible to free acid groups (in particular under the coating (including matrix processing) conditions described hereinafter), for example salts and anhydrides.

Within the scope of the term "condensable group containing silicon" are included all groups containing moieties (directly or indirectly bonded to a silicon atom) which moieties are capable of reaction and elimination in a condensation reaction under non-extreme conditions. Examples of such moieties include OH or OR (where R is optionally oxa-substituted $C_{1-6}$ alkyl) directly bonded to a silicon atom, which can react as:

OH with $OH/OR:H_2O/ROH$ eliminated.

It is believed that the present adhesion promoter composition (and its polymer component) provides versatile compatibility with or means of bonding to the surface of different substrate materials. Thus the compositions may be used with variety of substrates or substrate components, including metallic, amphoteric, basic or siliceous substrates. It is believed that the composition is chemically bonded under the reaction conditions for coating the substrate with adhesion promoter by eg reaction of the acidic group with the surface of a metallic, amphoteric or basic substrate, condensation of the condensable group in the adhesion promoter polymer with the surface of a siliceous substrate, reaction of either or both groups with a basic, amphoteric or neutral substrate with surface hydroxylic functions (eg alumina trihydrate or polyester), or reaction of either or both groups with a substrate which is both amphoteric and siliceous (eg clay). Within adhesion promoter polymers of the present invention which contain a precursor of the acidic group, the precursor is believed often to convert to the group itself or dissociate to its anion(s) (to facilitate bonding to the surface of a metallic, amphoteric or basic substrate) under the coating conditions, eg under the filler coating and /or matrix processing conditions described hereinafter. Substrates which are incapable of bonding to the adhesion promoter may be used with the adhesion promoters of the present invention, but this may be at the expense of the desirable condensation reactions between substrate and adhesion promoter polymer, and may hence lead to a substrate - promoter bond of reduced strength, and in the case of a filled polymer matrix to unenhanced bulk physical properties of the polymer.

It will be appreciated that the use of the present adhesion promoter on metallic, amphoteric, basic or siliceous substrates is particularly advantageous with a coating/matrix polymer or its (eg uncrosslinked) precursor which is not capable of optimum bonding or adhesion direct to the substrate, but to which the adhesion promoter is capable of bonding (see below), ie a polymer precursor in which any substituents are not acidic@ nor precursors of such acidic groups, where the substrate or a component thereof is metallic, amphoteric or basic, nor condensable groups containing silicon as hereinbefore defined where the substrate or a component thereof is siliceous.

The present adhesion promoter polymers and their polymer components (and substrates (including fillers) coated with them or compositions containing them) are believed to be compatible with most conventional coating matrix polymers (as may readily be ascertained in specific cases by routine trial). They appear compatible with coating/matrix polymers or their precursors which are without cross-linking functions (eg polyethylene), and uncured cross-linking polymer precursors and cured cross-linked polymers. The adhesion polymers/precursors are particularly useful with coating/matrix polymers/precursors with which they appear to be capable of bonding, via the acidic group or the condensable group containing silicon.

In the former case the coating/matrix polymer/precursor may contain basic or neutral groups generally comprising active hydrogen atoms, eg amino or amido groups in eg polyamides, or hydroxyl groups in polyesters, polyethers or polyepoxides.

In the latter case, suitable coating/matrix polymers/precursors include cross-linking polymers/precursors having a condensable group containing silicon as a cross-linking function.

Alternatively or additionally, the adhesion promoter polymer is also particularly useful where it is otherwise capable of bonding to the foregoing coating/matrix polymers eg as in the following specific (and non-limiting) cases.

In addition to being capable of cross-linking to the last named polymers with a condensable silicon-conatining group, the polymer skeleton is favourably capable of reacting with other cross-linkable coating/matrix polymer/precursors. For example, where a cross-linkable coating/matrix polymer contains olefinic unsaturation, the adhesion promoter polymer preferably also contains unsaturation, preferably olefinic unsaturation, and often in an otherwise paraffinic polymer backbone for example, it may contain a polydiene structure, capable of free-radical cross-linking, or sulphur cross-linking on the addition of sulphur.

Alternatively or additionally, the adhesion promotor or coating/matrix polymer may contain reactive sulphur atoms which are capable of forming polysulphide coating/matrix bridges. Sulphur-curable rubber matrices are of interest among polymers of this type.

Accordingly in one embodiment of its third aspect, the present invention provides a polymer component of the adhesion promoter composition (all as hereinbefore defined) which also comprises a cross-linking function other than a condensable silicon-containing group. In a preferred embodiment the cross-linking

3

function is olefinic.

It will be appreciated that such an adhesion promoter polymer is capable of linking a polymer having only a corresponding cross-linking function (but no acidic or condensable silicon containing group) with another polymer which contains a group capable of reacting with the acidic or condensible silicon-containing group, as its only (cross-linking) function (described hereinafter). Thus, in addition to its use on inorganic substrates, use of the present adhesion promoter may be advantageous or necessary where eg fibres (or particles) of a high melting point, high tensile, cross-linkable thermoplastic polymer are used as reinforcement in a basic, hydroxyl containing or silylated matrix polymer, especially those more fully described hereinafter.

Generally, the versatility of the polymer increases with the variety of binding groups (as hereinbefore described), and the potential matrix bonding increases with the weight percentage of such groups in the polymer.

A generally preferred binding group concentration for each binding group is at least one such group per 5000, preferably per 3000 total polymer molecular weight.

However within that range each such group will have a favoured concentration range which may depend inter alia on the specific conditions of use (eg on specific substrates), on the other groups present in the polymer, and on the polymer molecular weight. As noted hereinafter, it is preferred that under their conditions of use (ie in substrate coating) these polymers are liquids (albeit viscous to resinous liquids) or fluid solids. we have found that, outside the preferred group concentration ranges, the corresponding polymers may tend to an unwanted and economically disadvantageous side reaction in some processing and/or in prolonged storage to produce a gel which is difficult to use.

Thus, for polybutadiene-based polymers with a molecular weight up to 10,000, the acidic group (or preferably its precursor) is in general favourably 7 to 25 weight % of the total polymer, in particular 7 to 10%. However when used with siliceous substrates and/or when the polymer contains relatively more reactive silicon-containing groups (eg triethoxysilyl - see below) the concentration is preferably 4 to 10%, in particular 4 to 5%.

Similarly for such polymers the concentration of condensable silicon-containing groups is in general favourably 5 to 10 weight % of the total polymer, in particular about 5%. However, again, when such groups are relatively more reactive and/or the polymer contains relatively high concentrations of acidic groups or precursors thereof the concentration is favourably 4 to 5% w/w of the total polymer.

The polymer is conveniently one with a number average molecular weight in the range 200 to 50,000, preferably in the range 500 to 15,000, in particular 1000 to 10,000 and may be a non-particulate fluid, such as a liquid at ambient temperatures. However, the polymer may also conveniently be in the form of a free flowing powder with a melting point range within the range of 30 to 230, more conveniently 30 to 130°C. (See the coating process description hereinbefore).

Suitable acidic groups within the polymer include carboxylic acid groups and ethyl or ethylene groups 1,2-disubstituted by carboxylic acid groups. As mentioned hereinafter in connection with the silicon-containing group, it is preferred that the polymer does not contain acidic or basic substituents, since these tend to facilitate self-condensation of the polymer in the adhesion promoter at the expense of the desired condensations. Neutral precursors of the acidic group are thus preferred, for example salts or anhydrides.

Suitable salt precursors include alkali metal (eg sodium), alkaline earth metal and quaternary ammonium salts of carboxylic acid groups. The salts are advantageously much more stable than the acids or anhydrides, although the latter may have other advantages eg in the coating process.

Suitable anhydrides include $\alpha,\beta$-dicarboxylic cyclic anhydrides, as terminal or non-terminal functions, such as those derived from maleic anhydride, where the acidic group precursor is the whole cyclic moiety.

The condensable group containing silicon may suitably be a group (attached directly or indirectly to the polymer) - SiXYZ where one of X, Y and Z is OH or OR (where R is an optionally substituted hydrocarbyl group), and the other two are each independently OH, OR, R or a bond to the rest of the polymer. Favoured such groups include those which contain at least one OR group as defined. R is preferably optionally oxa-substituted $C_{1-6}$ alkyl. It is preferred that any other substituents in R are neither acidic nor basic.

It will be seen that all the above-listed groups contain at least one group X, Y or Z which is capable of reaction and elimination in condensation as mentioned hereinbefore.

Examples of such groups are included in the following groups, which are attached directly to the polymer backbone:

$(R_1O) (R_2O) (R_3O) Si-A-$
$(R_1O) (R_2O) R_4Si-A-$
$(R_1O) R_5R_6Si-A-$

4

wherein $R_1$ to $R_6$ are each independently optionally oxa-substituted $C_{1-6}$ alkyl, such as methyl or ethyl and A is a bond or $C_{2-10}$ alkyl, such as ethyl. Particular groups include silyl and silylethyl fully substituted on the silicon atom by any combination of groups selected from methyl, ethyl, methoxy and ethoxy, provided at least one such substituent is alkoxy.

Where the adhesion promoter polymer also contains olefinic unsaturation, in an otherwise paraffinic polymer backbone, such as a polydiene structure, examples of such structures include polymers and copolymers derived from one or more dienes, of which the most conveniently available is butadiene, although others may be used if desired (for example isoprene and chloroprene and mixtures thereof). Examples of other compounds which may be copolymerised with the diene or dienes include a wide range of vinyl monomers, for example, styrene, acrylonitrile, and mixtures thereof.

In general, it is believed, most conventional coating/matrix polymers mentioned herein may if desired also be used as an additional adhesion promoter composition component, especially in the case of adhesion promoters for substrates other than particulate fillers.

The composition may also contain a conventional antioxidant, suitably as up to 5 weight % of the coating composition.

The adhesion promoter polymers of the present invention my be prepared by known processes such as silylation or alkylation of an organic polymer containing an acidic group (or a precursor thereof), and of number average molecular weight such that that of the product is not greater than 300,000 and which contains an acidic group precursor.

Such known processes include reaction of the organic polymer with an appropriately substituted silane precursor of a desired silicon-containing group (conveniently in the presence of a catalyst, for example a platinic catalyst) followed by any desired or necessary conversion of the product to the desired polymer of the present invention. For example, a tri-$C_{1-4}$ alkoxysilyl group may be introduced by reaction of a polymer, with a tri-$C_{1-4}$ alkoxysilane, or trichlorosilane, with, in the case of a trichlorosilane, subsequent $C_{1-4}$ alkoxylation. The polymer must contain a function capable of reaction with the silane, for example unsaturation across which the Si-H bond can add, or less favourably an eliminable group for example a halo group.

Similarly, such known processes include conventional reaction of an appropriately substituted organic polymer with a poly $C_{1-4}$ alkoxysilyl $C_{2-10}$ alkyl halide.

Starting material polymers may also be prepared conventionally, for example, in the case of polydiene-carboxylic acid anhydrides or -$\alpha,\beta$ dicarboxylic and cyclic anhdrides, by reacting a polydiene, eg polybutadiene or polyisoprene with a relevant mercaptoanhydride (eg bis(mercaptoacetic) anhydride or mercaptosuccinic anhydride, or a relevant mercaptocarboxylic acid or diacid followed by dehydration. Such anhydrides may also be prepared by suitable oxidation and dehydration of olefinic unsaturated groups in a polydiene, or by copolymerising a diene or reacting a polymer with allylic hydrogen atoms, such as a polydiene, with a relevant olefinic carboxylic acid anhydride (eg maleic anhydride) or a relevant olefinic carboxylic acid followed by dehydration. Salts of the above carboxylic acids may be prepared conventionally from the above acids or anhydrides.

In a fourth aspect the present invention provides a substrate coated at least in part with an adhesion promoter composition of the first aspect of the invention. In one embodiment of this fourth aspect the substrate is a particulate or fibrous filler, preferably an amphoteric or basic particulate filler.

Materials which are suitable for the substrates in the present invention include the following and mixtures thereof:

metals:
iron, cobalt, nickel, copper, aluminium, manganese, chromium and molybdenum, and alloys thereof including steels and bronzes;

basic materials:
those listed hereinafter as suitable filler materials; and basic plastics (including such high tensile thermoplastics, eg polyamides).

siliceous materials:
in addition to those listed hereinafter as suitable filler materials, silicon carbide and glasses (especially refractories);

acidic, amphoteric or neutral materials:
metal oxides, such as transition metal oxides, including single oxides, such as titania, and iron and cobalt oxides, other oxides such as alumina, and mixed metal oxides, such as ferrites and chromites and those comprising magnesium;

metal borides, carbides, nitrides and arsenides, such as those of main group and transition metals;

non-siliceous non-metal oxides and other compounds, such as boron nitride and carbide non-siliceous mixed metal/non-metal oxides, such as those comprising magnesium, aluminium and/or iron;

carbon; (including carbon blacks and graphites); and

plastics (including high tensile and other thermoplastics such as polyester).

The substrate may be in any solid form, eg an extended surface, a fibre, or particulate eg a powder or granulate.

Where the substrate is an extended surface, any of the foregoing materials may be used.

Where the substrate is fibrous, it may if metallic be a wire of any of the foregoing metals. If such a fibrous substrate is amphoteric, it may eg be a transition metal oxide. eg zirconia, or other metal oxide, eg alumina. Basic fibrous substrates include polyamides. If a fibrous substrate is siliceous (eg an optical fibre), it may eg be a silica or glass fibre. Suitable neutral, acidic or amphoteric materials include carbon fibre, and polyesters.

The foregoing fibrous substrates if suitably dimensioned may also be used conventionally as reinforcing fillers in eg plastics or metal composites as appropriate. Suitable applications and substrate dimensions therefore will be well known to the skilled man.

Where the substrate is particulate, it may be a filler (including a fire-retardant) or other particulate matter, eg catalyst, abrasive, pigment or recording media particles. Such other particles may be metallic (eg catalyst and recording media particles), and may then be any of the foregoing metals as appropriate. If amphoteric (eg catalysts, pigment and recording media particles), they may be any of the foregoing transition metal oxides, including single oxides and mixed metal oxides. If siliceous (eg abrasives), they may be silicon carbide or glasses. Suitable neutral materials (eg for abrasives) include metal borides, carbides, nitrides and boron nitride and carbide.

Suitable applications and substrate dimensions therefore will be well known to the skilled man.

In that embodiment of the fourth aspect of the invention where the substrate is a particulate or fibrous filler, any such filler may be used (including the abovementioned fibrous materials), provided that it is stable in the coated end product, either as such or incorporated in a polymer matrix, and under any processing conditions@ in particular under any filler heating or coating, or matrix formation, conditions; it is however preferred that the filler is amphoteric, basic or siliceous and is thus clearly capable of binding to the acidic group (present in the initial adhesion promoter polymer or produced in the filler coating or matrix formation processes, as hereinbefore described) or the silicon-containing group in any of the foregoing. The filler should of course desirably be insoluble in water.

Where the filler is particulate, it may be amphoteric, eg such an oxide. Suitable fillers include oxides of aluminium, including hydrated alumina. Such particulate fillers may be of natural or synthetic origin.

The filler, if basic, may be for example an oxide, a hydroxide, a carbonate or a basic carbonate. Suitable fillers include oxides, hydroxides, carbonates and basic carbonates of alkaline earth metals and of zinc, and especially carbonates. Preferred carbonates are the carbonates of calcium and magnesium, especially calcium carbonate. Other suitable fillers include magnesium hydroxide. Such filler particles may be of natural or synthetic origin. For example, calcium carbonate may be in the form of ground chalk or in the form of a precipitated calcium carbonate, for example calcium carbonate prepared by carbonation of milk of lime.

Suitable siliceous materials may be natural or synthetic. Suitable siliceous filler particles may consist of substantially pure silica eg sands, quartzes or cristobalites or may contain silica together with a proportion of one or more other metal oxides, for example acidic oxides, eg titania, or metal oxides capable of forming silicates, eg calcium, magnesium, and aluminium and combinations of these. They may consist of a silicate, provided the silicate is one which is suitable for use as a filler for example if it is insoluble in water. Suitable silicates include clays and talcs which can be produced in a sufficiently finely divided form to serve as fillers.

We strongly prefer that the siliceous particles contain free silanol groups at their surface, either by virtue of their constitution or by modification during manufacture of the material into particles of desired dimensions. We therefore prefer that the siliceous particles consist predominantly of silica and we especially prefer that they consist of substantially pure silica itself. A very suitable material is that known as precipitated silica, which may be made for example by precipitating silica from aqueous solutions of alkali metal silicates by acidification. If desired, other forms of silica may be used, for example that made during burning silicon tetrachloride in air (commonly described as "fumed silica").

Neutral particulate filler materials which may be used include carbon, such as graphite.

Mixtures of all the foregoing particulate fillers may be used.

The coated substrate of the fourth aspect of the present invention may have any form suitable for its intended purpose, and may thus have a wide variety of shapes and sizes.

For example, it may be any relatively large body (ie other than a fibre or a particle) with an extended coated surface.

Fibrous substrates may vary widely in length to width ratio (depending inter alia on the physical properties of the material), from bristles not dissimilar to acicular particles through staple and discontinuous to continuous filaments. Depending on this ratio the uses of the materials may include use as simple fillers, as reinforcer fillers using the filament tensile properties, and in fibre optics.

The applications of the fibrous (filament) substrates may require various bulk forms which are conventional in the art (determined inter alia by the physical properties of its constituent material). The component fibres and/or the bulk substrate may be coated in the present invention.

Thus for example the shorter filaments may be as flock or down, or where desired the longer ones may be (according to thickness) a floss or fleece or a wool of fibre strands or in a woven mat or non-woven felt.

Suitable materials may conveniently be coated or encapsulated as a conventional single fibre tow, or as a multiple tow to give a tape or ribbon.

Some fibrous substrate may occur with an intrinsic twist, or substrate materials may be twisted alone or together as a yarn or cable.

The term 'particulate' used herein to describe a substrate includes particles other than fillers and comprises a wide spectrum of particle sizes, the appropriate applications for which are well known in the art. It thus includes fine dusts and flours, and, passing through powders and granules, extends to relatively coarser grains, grits chips and splinters.

In that embodiment of the fourth aspect of the invention where the substrate is a particulate filler, the substrate may have any form suitable for a filler, and may have a wide variety of particle shapes and sizes. For example, they may (most commonly) be of substantially spherical shape, though they may if desired be of fibrillar or laminar form.

Most commonly the filler particles will have a size in the range 10 Angstrom to 1 mm, though we prefer, on account of the good reinforcing effect, that the particle size is in the range 40 Angstrom to 1000 Angstrom, for example 75 to 500 Angstrom.

In the filled matrices of the present invention, the tensile strength or resistance to wear, or (in the case of matrices comprising fire-retardant fillers) the fire resistance, of the matrix may be greatly increased by a high filler loading. To facilitate such high filler loadings the filler particles may be a mixture of two sets of particles with two widely differing mean sizes, such that one set of particles can fit into the interstices of the other in the matrix.

Most conveniently the uncoated particulate filler is in the form of a finely divided, free flowing powder: this is the form in which such fillers are usually available in commerce.

The matrix coated fillers of the present invention have some of the properties of the filler particles from which they are derived, and in addition have high compatibility with organic polymers.

Thus the coated filler products are also finely divided, free-flowing powders, and this together with their high compatibility means that they have the valuable property of being very much more readily mixed with an organic polymer than does the unmodified filler.

The uncoated filler may be dried, for example by heat, before use in the products of this invention, in order to drive off all or part of any adsorbed water as appropriate.

The thickness of the adhesion promoter on the substrate which is desirable in practice may vary widely with the specific conditions of use, eg it may be in the range of a monolayer thickness to 500 μ, but is often relatively thin, eg up to 70 Angstrom, or up to 35 Angstrom. However, optimisation of the thickness for the desired physical properties of the adhesion promoter coated substrate, including in particular the adhesion between the substrate and a further surface coating, is a matter of routine trial.

In general at least 95% of the area of the substrate over which it is desired to enhance the adhesion of a surface coating will be coated with the adhesion promoters of the present invention, but at least 40% eg 75% may be acceptable.

In that the embodiment of the fourth aspect of the invention where the substrate is a particulate filler, the proportion of adhesion promoter to filler in the coated filler of the invention may vary, but is often in the range of 0.2 to 200 parts by weight of adhesion promoter composition per 100 parts by weight of filler, that is, the adhesion promoter coating is about 0.2 to 65 weight % of the coated filler. Favoured coating proportions are in the range of 1 to 25 parts by weight (about 1 to 20 weight %). Within this range, proportions in the ranges 1 to 10, 10 to 15, and 15 to 25 parts by weight (about 1 to 10, 10 to 13 and 23 to 20 weight %) may be preferred for different filler materials. However, optimisation of the proportions for desired physical properties of the matrix coated filler or of any polymer matrix in which it is dispersed as a filler in accordance with the present invention is a a matter of routine trial (eg for the production of a free-flowing powder or a high-tensile or high-modulus filled matrix).

The filler particles will often be at least 95% coated, favourably fully coated. However, partially coated particles may be acceptable, for example at least 40%, favourably at least 75%, coated.

In a fifth aspect the present invention provides a process for the production of a coated substrate of the fourth aspect of the invention, which process comprises intimately contacting the substrate with an adhesion promoter composition of the present invention.

In common with other adhesion promoters, as noted hereinbefore, the adhesion promoters of the first aspect of the present invention may be applied to a substrate by:

a) coating the substrate with an adhesion promoter (and then as desired applying a surface coating composition), or

b) incorporating an adhesion promoter into the surface coating composition and applying that directly to the substrate (to the surface of which it will tend to be adsorbed and or bonded selectively).

In one embodiment of this fifth aspect the substrate is a fibrous or particulate filler, and in variant b) of the process the surface coating composition is a polymer matrix or a precursor thereof in which the filler is dispersed.

In a sixth aspect the present invention provides a substrate coated at least in part with an adhesion promoter composition of the first aspect of the invention and a surface coating composition. In one embodiment of this sixth aspect the substrate is a particulate filler coated at least in part with the adhesion promoter composition and dispersed in a matrix of the surface coating composition.

In a seventh aspect the present invention provides a process for the production of a coated substrate of the sixth aspect of the present invention, which process comprises intimately contacting a surface coating composition or a precursor thereof with:

a) a coated substrate of the fourth aspect of the present invention, or

b) a substrate and an adhesion promoter composition of the present invention.

Where a precurser is used, the coating thereof on the substrate is subsequently converted to the surface coating composition itself.

In one embodiment of this seventh aspect the substrate is a fibrous or particulate filler and the surface coating composition is a polymer matrix or a precursor thereof in which the filler is dispersed in the course of the process.

Process variant b) is preferred.

The characterising steps of the processes of the fifth and seventh aspects of the present invention (in both variants of each) will in general be carried out identically for a given substrate.

The appropriate type of coating process will be determined largely by the specific form of the (uncoated or coated) substrate to be (further) coated, and will in general be that conventionally used therefore, although the physical properties of the appropriate coating composition (adhesion promoter, surface coating or precursor thereof, or mixture of any of the foregoing) will clearly also have some effect.

Similarly, the question of the optimisation of the non-extreme coating conditions is a matter of routine trial, but the following gives an indication of suitable process types and parameters:

In general in all the variants of both coating processes of the present invention, regardless of the specific substrate or coating composition, it is preferred that the coating composition is a fluid under the coating conditions, and in particular that it is a fluid suspension or dispersion, or a liquid solution.

Where the substrate is an extended surface, the coating composition may be applied as a fluid by the following methods, depending as is conventional on the physical properties of the coating composition, such as its viscosity under the process conditions, and the desired physical properties of the resultant coating, such as its thickness. Suitable methods include applications by brush, doctor knife, roller, casting on the surface and spraying; the latter as is conventional may also be combined with an electrostatic field for greater accuracy of application.

Where the substrate is a discontinuous or continuous fibre or a corresponding parallel multiple tow, or twisted yarn or cable, the coating composition may similarly be applied conventionally by methods which include coextrusion of the coating composition about the substrate, and spraying as described above.

Where the substrate is fibrous, but in one of the extended bulk forms described hereinbefore (eg a flock, or a woven mat), the coating composition may be applied to it by any of the methods described above for application to an extended surface.

Where the substrate is a particulate filler, the coating composition may conveniently be applied by intimately mixing the substrate and the filler.

The mode of mixing of the components may need to be adapted to suit the particular components used; for example a high-shear blender or ball or multi-roll mill may be most suitable.

In all the foregoing modes of application, the following linking reactions may be carried out during the coating process and/or subsequently (eg in the case of coating the substrate with adhesion promoter only, subsequent reactions may be carried out in any second coating with a surface coating composition or even thereafter): filler-adhesion promoter linking, adhesion promoter cross-linking, adhesion promoter-coating/matrix linking, and coating/matrix cross-linking, including linking to precursors of the relevant components. For both ease of application of fluid coating compositions (the viscosity of which generally decreases usefully with rising temperature) and to promote any of the above linking reactions, it may be helpful to apply some heat during and/or after the application (especially if any linking functions eg acidic groups or condensable silicon-containing groups as apt are not particularly reactive or not in particularly high concentration in any component of the coating composition. Alternatively or additionally radiation curing (including electron beam irradiation) may be used .

Thus, with the application of heat as necessary, materials with a range of melting points (and mixtures thereof) may be applied as a fluid to a wide variety of substrates (including eg those substrates already coated with an adhesion promoter of the present invention, which advantageously contain components which themselves melt or soften) in the process of the present invention. Suitable reaction temperatures may thus vary over a wide range below that which is deleterious to any component, but will typically be in the range of 15 to 200°C.

As noted hereinbefore, the adhesion promoter polymer is often conveniently liquid (even if a viscous liquid) at ambient temperatures or in the form of a free flowing powder with a melting point range within the range of 30 to 230, more conveniently 30 to 130°C. The convenience of such properties in any of the variants of the present processes in which the adhesion promoter polymer is, or is a component of, a coating composition will be readily appreciated.

Ambient pressure is a suitable process pressure.

Alternatively or additionally to the use of heat, an organic solvent or dispersant ('vehicle') may be used to assist the spread of the coating composition over the substrate (especially eg when a very thin coating of adhesion promoter composition on the substrate is desired, or put another way in the case of a coated filler, the adhesion promoter coating is to be a low weight proportion of the filler coated therewith), or when the coating composition is not fluid at the application temperature.

The vehicle may be chemically inert towards the coating composition and the substrate and it is especially desirable that it should be inert towards the substrate, so that it is not preferentially adsorbed thereon to an extent which appreciably diminishes the affinity of the adhesion promoter polymer for the surface of the substrate, and/or towards any coating composition components, so that it does not react preferentially with them to an extent which appreciably diminishes any tendency/their ability to bond to the substrate, each other, or, in the case of a coating composition which is an adhesion promoter, to any subsequent surface coating agent.

In both the fifth and seventh aspects of the present invention, liquids or fluids, albeit viscous to resinous liquids or fluids, are applied to the surface of the substrate. Where the vehicle is inert, it will in general be necessary to remove the vehicle from the coated product, especially from coated filler particles. Thus, in addition to promoting the spreading of the coating composition and various linking reactions (desirably adhesion promoter-surface coating linking), applied heat may advantageously be used to remove vehicle, so that the vapour pressure characteristics and/or boiling point of the vehicle may be significant in the coating process.

However, where for example the coating process is either variant of the seventh aspect of the present invention (ie a process for the production of a coated substrate of the sixth aspect of the present invention), and the adhesion promoter polymer and/or the surface coating polymer or a precursor of either or both contains olefinic unsaturation, it may in some cases be convenient to use a vehicle which also contains such unsaturation. Such a vehicle will of course in general be capable of taking part in any concomitant or subsequent linking reactions, eg within and/or between any of the foregoing polymers or precursors (most desirably in adhesion promoter - surface coating linking as referred to elsewhere herein). Such a vehicle is useful eg in the coating of extended substrate surfaces, in particular with a fast reacting eg uv curing surface coating composition. Similarly, the vehicle may contain any function capable of reaction with the silicon containing group of the adhesion promoter polymer of the present invention and/or any such group in the coating/matrix polymer, so that the vehicle may promote adhesion promoter-coating/matrix polymer linking especially at the substrate surface.

Examples of suitable organic vehicles include hydrocarbons, for example aliphatic, aromatic, araliphatic or cyclo-aliphatic hydrocarbons, eg toluene, xylene and petroleum fractions; halogenated and especially chlorinated hydrocarbons, for example methylene chloride, chloroform, carbon tetrachloride, 1,2-dichloroethane, trichloroethylene and tetrachloroethylene; ethers, for example diethyl ether; and mixtures thereof; all optionally with added water (see below). Examples of the reactive vehicles referred to hereinbefore include precursors and derivatives of the coating/matrix polymers mentioned herein which are liquid and readily reactive under the coating conditions, in particular those which are acrylics.

In general the versatility and choice of any given material as the vehicle will be limited by such factors as low flammability, low toxicity, inertness/reactivity and boiling point, which may be significant both in use and in the crosslinking of the vehicle into the final coating, or removal of the vehicle from the coated substrate.

The proportion of vehicle should be sufficient to dissolve and/or fully disperse the coating composition (as incomplete solution or dispersion may result in undesirable local concentration of composition), and be sufficient to produce a fluid which can readily flow to cover the substrate to the desired extent. Suitable proportions can be determined by simple routine trial and are not necessarily critical.

Where the substrate is a fibrous or particulate filler it is also important that the amount of fluid containing the composition which is used should be sufficient to cover the surface of the filler as thoroughly as possible if the most useful fillers are to result. Coveniently an excess of fluid sufficient to produce a thoroughly wetted mixture may be used.

Where the coating composition is an adhesion promoter composition and it is desirable to isolate the adhesion promoter coated filler (as may be readily ascertained in specific cases by routine trial), the filler may be separated from the fluid and dried, additionally or alternatively to removal of vehicle by heating as hereinbefore described.

Application times are typically in the range 1 minute to 6 hours.

Where a basic substrate is coated by a coating composition comprising a polymer containing an acidic group precursor, it will be necessary to convert that precursor group to the acidic group. This is conveniently effected in situ in the coating process by incorporating a converting reagent in the process. Thus, for example, where the precursor is an anhydride, a suitable reagent is water, either (favourably) as reactable water within the filler itself or within any vehicle used.

Where a basic or siliceous substrate is

a) adhesion promoter coated and it is intended to use the coated substrate with a coating/matrix polymer which contains a condensable group containing silicon,

or

b) where it is coated with a coating composition containing both an adhesion promoter of the present invention and such a coating/matrix polymer, it is preferred to retain a significant proportion of condensable silicon-containing groups in the adhesion promoter for promoter-matrix bonding, as noted hereinbefore. In such cases it may be preferred to limit the coating process water content and/or temperature, if hydrolysis of such coating groups will impair coating/matrix bonding to the adhesion promoter via a reacted group containing silicon as the linking function, or such bonding within a cross-linked coating/matrix polymer, or even between a siliceous substrate and the present adhesion promoter.

Where the coating composition contains a sulphur-curable polymer, such as a rubber in a surface coating composition and/or a polydiene based adhesion promoter polymer, a sulphur containing vulcanising agent may also be added to the coating composition for polysulphide linking within or between the adhesion promoter and/or the surface coating/matrix or any precursor thereof during and/or after either of the present coating processes.

The coating may also be carried out in the presence of protecting agents, eg antioxidants, and/or in an inert atmosphere, eg nitrogen, argon or solvent vapour, if it is desired to guard against deterioration of any polymer during any heating or irradiation that may be necessary, eg to effect linking as described hereinbefore.

Specific features of the fifth (adhesion promoter coating) and seventh (full coating) aspects of the present invention will now be described.

In one embodiment of the coating of the substrate, ie in coating a filler wih an adhesion promoter alone, in variant a) of the fifth aspect of the present invention the resulting product may be in a form in which it can be used directly or it may need to be treated mechanically, e.g. by grinding, to break up agglomerates and reduce them to a suitably small particle size. This is not essential in all cases, however, as any necessary breakdown of the agglomerates may take place satisfactorily while the filler is being incorporated into a polymer matrix for example by milling.

In another embodiment of the coating of the substrate, ie variant b) of the seventh aspect of the present invention, ie the coating of a substrate with a coating composition comprising the present adhesion promoter and a matrix polymer or a precursor thereof, not all of the adhesion promoter polymer of the present invention may coat the substrate, and such coating in this process may be hampered. This may be the case, for example, where the coating/matrix polymer/precursor contains condensable silicon-containing groups which compete with a siliceous substrate for corresponding adhesion promoter polymer-binding groups. Additionally, the adhesion promoter and such uncured cross-linkable matrix polymers/precursors may undergo mutual linking in the bulk of the matrix, so that some of the adhesion promoter is unable to bond to the filler surface. Those adhesion promoter and uncured cross-linkable matrix polymers/precursors which contain olefinic unsaturated groups, eg in a polydiene structure, may behave similarly with similar consequences. In such instances it may be desirable to use an excess of adhesion promoter polymer/composition over that used to coat the substrate alone. However, in general the present adhesion promoter polymers seem to have a relatively good selective affinity, certainly for metallic, basic, amphoteric or siliceous substrates, so that no major disadvantage arises in this process variant. Additionally, the advantages eg in bulk physical properties, conferred by some of the foregoing (cross-)linking reactions may outweigh any loss of benefit from hampered coating.

In the general process of the seventh aspect of the present invention, the product substrate will often be coated with a precursor of the final coating/matrix composition, and it will be necessary to convert the precursor to the desired final composition generally by crosslinking as described hereinbefore, but also by shaping and the like, eg by heating to cure a thermosetting polymer, or by heating to cure, processing to shape, and cooling for a thermoplastic as such a coating/matrix polymer.

In another embodiment of the coating of the substrate, ie in the seventh aspect of the present invention, the coating composition is or comprises a precursor of a surface coating composition, which may be a polymer matrix precursor.

As noted hereinbefore, in a sixth aspect the present invention provides a substrate coated at least in part with an adhesion promoter composition of the first aspect of the invention and a surface coating composition. In one embodiment of this sixth aspect the substrate is a particulate filler coated at least in part with the adhesion promoter composition and dispersed in a matrix of the surface coating composition.

The coating/matrix polymer may be of widely varying constitutuion, and may be any polymer known in the art to be compatible with a substrate. Subject to this proviso, it may be a thermosetting polymer or a thermoplastic. It may be a homopolymer or any type of copolymer (e.g. random, block or graft). It may be cross-linked or not, and may be formed from a precursor which itself contains or does not contain cross-linking functions.

As mentioned hereinbefore any coating/matrix polymer or its precursor may be one without cross-linking functions, for example olefin-, vinyl-or acrylic-based polymers, such as homo-and co-polymers of ethylene, propylene, styrene, vinyl halides, esters and alcohols, acrylonitrile, and acrylic and methacrylic acids and esters, for examples polyethylene, and ethylene propylene and ethylene vinyl acetate copolymers.

The coating/matrix polymer or its precursor may be one with olefinic unsaturation, which provides cross-linking functions, such as a polydiene structure for example 1,3-diene-based rubbers, such as homo-and copolymers of butadiene, isoprene and haloprenes. Other such polymers/precursors include those based on diene (eg norbomadiene) copolymers with olefins, vinylics and acrylics, such as styrene, vinyl halides ad acrylonitrile, for example ethylene propylene diene copolymers.

The coating/matrix polymer or its precursor may be one with condensable cross-linking functions containing silicon, suitable such functions including those condensable silicon-containing groups mentioned herebefore for the adhesion promoter polymer, and its precursors. The polymer backbone of such functionalised polymers may be any of those of the two foregoing paragraphs into which such a group may be introduced, in particular such an organic polymer substituted in the main chain and/or in at least one side chain by at least one poly ($C_{1-4}$ alkoxy)silyl group.

Polymers of this type are discussed in greater detail in US Patent 3759869.

The coating/matrix polymer or its precurser may be one with basic or neutral functional groups (generally containing active hydrogen atoms) which are capable of bonding to or reaction with the acid group in the final adhesion promoter polymer. Such functional groups include amino and/or amido groups eg in polyamides and hydroxyl groups in polyesters, polyethers and polyepoxides.

Unsaturation and/or condensable cross-linking functions as in some of the foregoing coating/matrix polymers tend to make such a polymer matrix curable to, and therefore a precursor of, a polymer matrix of the present invention. Such precursor matrices form one embodiment of the coated substrate of the sixth aspect of the present invention.

A mixture of a plurality of mutually compatible coating/matrix polymers or precursors thereof may of course be used in any relevant aspect of the present invention.

As noted hereinbefore, the use of the present adhesion promoter on metallic, amphoteric, basic or siliceous substrates is particularly advantageous with a coating/matrix polymer or its precursor to which the adhesion promoter is capable of bonding, but in which any substituents are not acidic, precursors of such acidic groups, nor condensable groups containing silicon as hereinbefore defined, so that the coating/matrix polymer or its precursor is not capable of optimum bonding or adhesion direct to the substrate. The above listed polymers falling into this category will be readily apparent to the skilled man.

The thickness of the adhesion promoter on the substrate which is desirable in such a coated substrate will often be as given hereinbefore for the fourth aspect of the present invention.

Similarly, the thickness of a surface coating in the coated substrate of the sixth aspect of the present invention, in particular on an extended substrate surface, may vary widely in practice with the specific conditions of use, eg it may be in the range of a monolayer thickenss to 5 mm, eg up to 700 Angstrom, or up to 350 Angstrom. However, optimisation of the thickness for the desired physical properties of the coated substrate remains a matter of routine trial.

Where the coated substrate is a filled polymer matrix, the proportions thereof may vary, but is often in the range of 0.4 to 300 parts by weight of coated filler per 100 parts by weight of matrix polymer, that is, the filler is about 0.4 to 75 weight % of the filled matrix. Favoured proportions are in the range of 2 to 200 parts by weight (about 2 to 65 weight %). Within this range, proportions in the ranges 2 to 5, 5 to 10, 10 to 40 and 40 to 200 parts by weight (about 2 to 5, 5 to 10, 10 to 30 and 30 to 65 weight %) may be preferred for different filler and matrix materials. However, optimisation of the proportions for desired physical properties of the filled polymer matrix is a matter of routine trial on a case by case basis, depending on @he specific adhesion promoter, filler and matrix.

In such matrices the filler is coated as described hereinbefore. Where the filler is coated before incorporation into the matrix it is believed that the proportion of adhesion promoter to filler in the matrix is unchanged (ie by virtue of the constitution of the adhesion promoter coated filler particles being unchanged). Where the adhesion promoter polymer and uncoated polymer are incorporated separately into the matrix (before) it is (as described hereinbefore) unclear what proportions of adhesion promoter polymer are eventually present as a filler coating and as 'free' polymer in the matrix, since the proportion of filler to free polymer is modified during manufacture by binding of some of the free polymer to the filler surface. By no means all of the free polymer necessarily disappears in this way; indeed, higher proportions of coating polymer are generally used in these circumstances to ensure adequate filler coating.

For these reasons the matrix composition is best described in terms of total matrix polymer:filler:adhesion promoter polymer proportions and these may vary widely within the scope of the present invention inter alia with the density and specific surface area of the filler.

The proportion of matrix polymer may be as low as 5%, that of the filler may be 0.15 to 95%, and of the adhesion promoter polymer up to 50%, all percentages being by weight.

For a filler of relative density of about 2, and a specific surface area of about 3 $m^2$ $gm^{-1}$, favoured proportions are 25 to 98% matrix polymer, 2 to 75% filler and 0.1 to 15% adhesion promoter polymer; favoured proportions for other particle parameters will vary in a manner evident to the skilled man.

The coating/matrix may also contain conventional additives, eg antioxidants, antiozonants, plasticisers, vulcanisation accelerators, pigments and fillers other than those of the present invention.

We have found that in one embodiment of preferred process variant (b) of the seventh aspect of the present invention, ie the coating of a filler with a coating composition comprising the present adhesion promoter and a matrix polymer or a precurser thereof, the adhesion promoter acts as a good dispersant of the filler particles, independently of the presence or absence. or the nature, of any vehicle. Accordingly, in an eighth aspect the present invention provides the use of such adhesion promoters as dispersants for fillers in organic polymer matrices or precursors thereof.

The preparation of adhesion promoter compositions, coated fillers and filled polymer matrices of the present invention is illustrated by the following Examples. The preparation of adhesion promoter polymer starting materials is illustrated by the following Description.

Description

Preparation of MPBD's (Maleinised Polybutadienes Anhydride Precursors)Maleinised polybutadiene (D.1) was prepared by the reaction of polybutadiene (Lithene PL, 100 parts) with maleic anhydride (25 parts) at 180-190°C for six hours under a nitrogen atmosphere.

(Lithene PI consists of 40-50% vinyl-1,2; 30-40% trans-1,4; and 15-25% cis-1,4 unsaturation, Mn 1300)

The following MPBD's (D.2) and (D.3) were prepared analogously from Lithene PL or Lithene LX16 (polybutadiene, $M_n$ 8000)

|  | Polybutadiene | parts maleic anhydride |
|---|---|---|
| (D.2) | Lithene PL | 10 |
| (D.3) | " LX16 | 10 |

### Example 1

Preparation of Silylated MPBD's

Triethoxysilane (12.25g) was added dropwise, with stirring, to (D.1) of the Description (50g) in the presence of Spier's catalyst (0.1cm³, 0.1M hexachloroplatinic acid in isopropanol). The reaction temperature was increased slowly to 115°C. (the exotherm occurring at this point resulting in the temperature of the reaction mixture reaching 130°C) and subsequently held at about 100°C for three hours.

Evacuation of the sample to constant weight gave a brown@ viscous liquid (E.1), the analysis of which (by infra-red and nuclear magnetic resonance spectroscopy) was consistent with maleinised polybutadiene hydrosilylated specifically across the vinyl-1,2-double bonds, the silyl groups being 17% w/w of the polymer.

Analogous treatment of (D.1) to (D.3) with various proportions of triethoxysilane (TES) or methyldiethoxysilane (MDES) gave silylated MPBD's (E.2) to (E.9).

|  | from | silyl group | % w/w |
|---|---|---|---|
| (E.2) | (D.1) | TES | 5 |
| (E.3) | (D.1) | TES | 10 |
| (E.4) | (D.1) | MDES | 10 |
| (E.5) | (D.2) | TES | 10 |
| (E.6) | (D.2) | MDES | 10 |
| (E.7) | (D.3) | TES | 5 |
| (E.8) | (D.3) | TES | 10 |
| (E.9) | (D.3) | MDES | 10 |

### Example 2

Preparation of Coated Fillers .

a) Coated fillers are prepared by conventional high shear mixing of I Kg of the following filler materials (with particle sizes in the range 75 to 500 1) with respectively 10, 50 and 100 g of (E. 1) of Example 1: precipitated calcium carbonate, magnesium hydroxide, aluminium hydroxide, ultracarb U5 and calcined clay.

b) Coated fillers are prepared by conventional coating from toluene solution of the foregoing filler materials (1 Kg) with adhesion promoter (E.1) of Example 1 (10, 50 and 100 g in 2 1 toluene) followed by filtering and drying.

Example 3

Preparation of Filled Matrices

a) Filled EPDM Elastomer (Ethylene polypropylene diene copolymer).

Two EPDM formulations containing calcium carbonate (Calofort U, Sturge) were prepared by conventional elastomer compounding and pressing procedures. To one of these compounds (E.1) of Example 1 was added at the compounding stage. The formulations consisted of

| Component | parts by weight |
|---|---|
| Vistalan 3666 (EPDM) | 180 |
| ZnO | 5.1 |
| Permanox WSP | 1.1 |
| Sartomer 206 | 2.1 |
| Percadox 14-40 | 6.2 |
| Calofort U (filler) | 155 |
| and the second formulation contained | |
| Silylated MPBD (E.1) | 5.4 |

The properties of the two cured formulations were:

| | No Silylated MPBD | +Siylated MPBD |
|---|---|---|
| Tensile Strength MPa | 9.9 | 11.0 |
| 300% Modulus MPa | 2.2 | 3.6 |
| Compression Set % | 15 | 11 |
| (24 hours @ 70°C, 25% strain). | | |

b) Filled Thermoplastic Ethylene Vinyl Acetate Copolymer (EVA)

EVA was compounded on a heated twin roll mill with magnesium hydroxide filler (Lycal 96HSE, Steetley). Two samples were prepared one without and one with silylated MPBD added during compounding. The formulations consisted of

| Component | parts by weight |
|---|---|
| Evatane 28-05 (EVA) | 98.5 |
| Rhenogran PSO | 3 |
| Lycal 96 HSE (filler) | 125 |
| and the second formulation contained) | |
| Silylated MPBD (E.1) | 5 |

c) Silane Grafted EPDM

Using an internal mixer a silane grafted polymer was prepared from 100 parts of Vistaflex VM42, 1.5 part of unsaturated silane (3-methacryloxypropyltrimethoxysilane) and 0.15 parts of 1,1-di-tert-butylperoxy-3,3,5-trimethylcyclohexane. The temperature was 160°c and total mixing time was 7 minutes.

The silane grafted polymer was then further compounded with 100 parts of dry magnesium hydroxide (Lycal 96HS) and 5 parts of (E.1) of Example 1. In one experiment the silylated MPBD was precoated onto the filler using toluene solvent, in another it was added as a separate component with filler at the compounding stage.

The filled polymer was then extruded and moisture cured.

Example 4

The processes of Example 2 are repeated using (E.2) to (E.9) analogously to give a range of coated fillers.

Example 5

The processes of Example 3 are repeated using (E.2) to (E.9) analogously to give a range of filled matrices.

**Claims**

1. An adhesion promoter composition comprising an organic polymer, of number average molecular weight up to 300,000, and containing an acidic group (or a precursor thereof) and a condensable group containing silicon.

2. An organic polymer for an adhesion promoter composition as defined in claim 1.

3. A polymer according to claim 2 which comprises a cross-linking function other than a condensable silicon containing group.

4. A polymer according to claim 3 wherein the cross-linking function is a polydiene structure.

5. A substrate coated at least in part with an adhesion promoter composition according to claim 1.

6. A coated substrate according to claim 5 which is a particulate filler.

7. A substrate coated at least in part with an adhesion promoter composition according to claim 1 and a surface coating composition.

8. A coated substrate according to claim 7, wherein the substrate is a particulate filler dispersed in a matrix of the surface coating composition.

9. A process for the production of a coated substrate according to claim 5, which process comprises intimately contacting the substrate with an adhesion promoter composition according to claim 1.

10. A process for the production of a coated substrate according to claim 7, which process comprises intimately contacting a surface coating composition or a precursor thereof with:
   a)a coated substrate according to claim 5, or
   b)a substrate, and an adhesion promoter composition according to claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 384 796 (IMPERIAL CHEMICAL INDUSTRIES LTD) <br> * Page 3, lines 9-25; page 4, lines 5-13; page 5, lines 1-34; page 7, line 35 - page 8, line 6 * | 1-10 | C 08 C 19/00 <br> C 08 F 8/42 <br> C 08 K 9/06 |
| X | US-A-4 368 297 (Y. KATO et al.) <br> * Column 3, lines 43-58; column 4, lines 22-24; claims * | 1,2 | |

TECHNICAL FIELDS SEARCHED (Int. Cl.4)

C 08 C
C 08 F
C 08 K

The present search report has been drawn up for all claims

| Place of search | Date of completion of the search | Examiner |
|---|---|---|
| THE HAGUE | 08-06-1988 | DE LOS ARCOS Y VELAZQUEZ |